# EUROPEAN PATENT APPLICATION

(11) **EP 4 122 727 A1**
(43) Date of publication of application: **25.01.2023**
(21) Application number: 22186516.5
(22) Date of filing: 22.07.2022
(51) Int. Cl.: B60H 1/34, B60H 1/00

(54) **AIR VENT ASSEMBLY FOR A VEHICLE**

(30) Priority: 24.07.2021 IN 202121033323
(71) Applicant: Faurecia India Private Limited, Bhosari, Pune 411026 (IN)
(72) Inventor: SHINGI, Rohit, 411018 Pimpri, Maharashtra (IN)
(74) Representative: Pfenning, Meinig & Partner mbB

(57) **Abstract**

Air vent assembly (100) for a vehicle, comprising a housing (20) defining an air duct with an air inlet (20-1) and an air outlet (20-2) arranged to guide and direct an air flow into a vehicle interior and one or more air directing member (60) being mounted to be movable in rotation relative to the housing (20) in one or more groove (80) provided in or on the housing (20) for changing the direction or shutting off the air flow into the vehicle interior, wherein the one or more groove (80) being open at one of its ends and a filling element (160) is arranged into the one or more groove (80) for closing the one or more groove (80) for blocking a translational movement of the air directing member (60) while allowing the rotational movement of the air directing member (60).

## Description

### TECHNICAL FIELD

The present disclosure relates to the field of an air vent assembly for a vehicle. More particularly, the present disclosure relates to an air vent assembly that is smooth to operate, and which can improve aesthetic appearance, convenience in use, and is easy to assemble the different components of the air vent assembly.

### BACKGROUND

In conventional vehicles generally a portion of an air vent housing has an openended groove to assemble an air directing member rotatably in or on the housing to change an air flow directivity into the vehicle. To close or cover this groove usually a deco bezel having an extended portion is assembled in or on the housing to close the open side of the groove. However, such an arrangement adversely affects the aesthetic appearance and the flexibility of the fit and finish as a V-step hole remains visible around the groove usually when seen from the side of the air vent assembly.

In addition, the hole left in the grooves may cause translation of the air directing member, which is highly undesirable and restricts users to smoothly operate the air directing member while changing the air flow directivity. Besides, the holes also expose the inner side or internal components of the air vent assembly as well as the vehicle to the external environment, which allows dust particles, moisture, and other unwanted objects or organisms to enter inside the air vent assembly or housing, leading to degradation or malfunctioning of the air vent assembly as well as the inner components of the vehicle.

Therefore, there is a need to overcome the above drawback(s) by providing an air vent assembly comprising an air directing member movable in rotation and blocked in translation by a filling element that is easy to assembly with satisfactory air-tight fitting and finishing and harmonious appearance.

### OBJECTS OF THE PRESENT DISCLOSURE

Some of the objectives of the present invention, which at least one embodiment herein satisfies are as listed herein below.

It is an object of the present invention to provide an air vent assembly designed for providing an easy to assemble air vent components like an air directivity vane(s), deco bezel etc.

It is an object of the present disclosure to provide an air vent assembly which is easy to operate.

It is an object of the present disclosure to provide an air vent assembly which has harmonious appearance.

It is an object of the present disclosure to provide an improved air vent assembly for a vehicle, which is lean, compact, and aesthetically pleasing by providing better and improved fit and finished air vent assembly.

It is an object of the present disclosure to provide a filling element for grooves of an air vent assembly of a vehicle, which can be air-tightly fitted into the grooves for blocking a translational movement of air directing members in or on the grooves however allowing the rotational movement of the air directing member.

It is an object of the present disclosure to restrict exposure of an inner side or internal components of an air vent assembly of a vehicle to the external environment.

It is an object of the present disclosure to restrict the entry of dust particles, moisture, and other unwanted objects or organisms inside an air vent assembly of a vehicle through the holes left in grooves provided in a housing of the air vent assembly.

### SUMMARY

The present disclosure relates to the field of an air vent assembly for a vehicle. More particularly, the present disclosure relates to an air vent assembly that is smooth to operate, and which can improve aesthetic appearance, convenience in use, and is easy to assemble the different components of the air vent assembly.

In an aspect of the proposed invention, the air vent assembly for a vehicle comprises a housing defining an air duct with an air inlet and an air outlet arranged to guide and direct an air flow into the vehicle interior. The air vent assembly further comprises one or more air directing member. The air directing member being mounted to be movable in rotation relative to the housing in one or more groove provided in or on the housing for changing the direction of the air flow or shutting off the air flow into the vehicle. For example one of the one or more air directing members may work as a knob that can be moved up-down or sidewise to rotate the one or more air directivity members. Particularly, the one or more groove being open at one of its ends.

In an aspect of the proposed invention, the air vent assembly also comprises a filling element wherein the filling element is arranged into the one or more groove for closing the one or more groove. More particularly, the filling element is flush-fitted into the one or more groove for blocking a translational movement of the air directing member in or on the one or more groove however allowing the rotational movement of the air directing member, and further keeping the inner side or internal components of the air vent assembly unexposed to and protected from the external environment, dust particles, moisture, and other unwanted objects or organisms.

In an aspect of the proposed invention, the one or more groove may have a disc or circular shaped close end portion and a V-shaped or flared shaped open-end portion. Wherein at least a portion of the filling element may have a dimension substantially same as of the V-shaped or flared shaped open end portion such that it forms an air-tight connection when the filling element is flush-fitted into the one or more groove for blocking the translational movement of the air directing member in or on the one or more groove however allowing the rotational movement of the air directing member in or on the one or more groove.

In an aspect of the proposed invention, the air directing member may comprise a pin mountable in or on the one or more groove. More particularly, the pin being rotatably disposed in or on the disc-shaped closed end portion of the one or more groove.

In an aspect of the proposed invention, the V-shaped or flared shaped open end portion of the groove may have a width greater than or equal to the width of the disc or circular shaped closed end portion and increasing between the disc or circular shaped closed end portion and the V-shaped or flared shaped open end portion of the one or more groove. In an aspect, at least any one of the one or more air directing member may include a knob to rotate the one or more air directivity member manually by a passenger.

In an aspect of the proposed invention, the proposed air vent assembly may have plurality of air directing members, each air directing members being mounted to be movable in rotation relative to the housing in a plurality of grooves and further comprising a plurality of individual filling elements that may be flush-fitted into the plurality of grooves for blocking a translational movement of the plurality of air directing members in the plurality of grooves however allowing the rotational movement of the air directing member with respect to housing for changing the air flow directivity into the vehicle.

In another aspect of the proposed invention, the air vent assembly may have a plurality of air directing members, each air directing members being mounted to be movable in rotation relative to the housing in the plurality of grooves, and further comprising a single filling element comprising a plurality of V-shaped or flared shaped slices that may be to be flush-fitted or at least partially flush-fitted into the plurality of grooves for blocking a translational movement of the plurality of air directing members in the plurality of grooves however allowing the rotational movement of the air directing member.

In an aspect of the proposed invention, wherein the filling element may have one or more fixing portion to engage and lock the filling element into a c-shaped slot of the housing. More particularly, the fixing portion is friction fitted or snap-fitted into the c-shaped slot like by using a hook-shaped member.

In an aspect of the proposed invention, the c-shaped slot may have a protruded portion arranged to engage and lock the hook-shaped fixing portion when the filling element is assembled or closes the groove.

In an aspect of the proposed invention, the air vent assembly may also have a deco bezel with a clipping member being releasably clipped onto or within an engaging member arranged in or on the housing of the air vent assembly. Further, a same material and colour as of the housing may be used for the filling element.

### BRIEF DESCRIPTION OF DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.

In the figures, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A and 1B illustrates an exemplary view of a proposed air vent assembly for a vehicle, in accordance with an embodiment of the present invention.
FIG. 2A illustrates an exploited view of a proposed air vent assembly illustrating a detailed view of the proposed filling element with a fixing member and a c-shaped slot in the housing located adjacent to the groove, in accordance with a first embodiment of the present invention.
FIG. 2B illustrates an exploited view of a proposed air vent assembly illustrating a detailed view of the proposed filling element along with a fixing portion and a c-shaped slot in the housing located adjacent to the groove, in accordance with a second embodiment of the present invention.
FIG. 3 illustrates an exploited view of a proposed filling element adapted to close a groove in or on a housing of the air vent assembly and a detailed view of the groove with the disc or circular shaped closed-end portion a V-shaped or flared shaped open end portion, in accordance with an embodiment of the present invention.
FIG. 4 illustrates an exemplary view of FIG. 3 where the groove is closed by the filling element is shown.
FIG. 5 illustrates a cross-sectional view of the proposed air vent assembly illustrating a protruded portion arranged to engage and lock the fixing portion when the filling element closes the groove, in accordance with an embodiment of the present invention.
FIG. 6 illustrates an exploited view of a proposed air vent assembly illustrating a housing with a groove, an air directing member with a pin, a filling element with a fixing member and a bezel with a clipping member.

### DETAILED DESCRIPTION

The following is a detailed description of embodiments of the disclosure depicted in the accompanying drawings. The disclosed embodiments are merely exemplary of the invention, which may be embodied in various forms. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

The present disclosure relates to the field of an air vent assembly for a vehicle. More particularly, the present disclosure relates to an air vent assembly that is smooth to operate, and which can improve aesthetic appearance, convenience in use, and is easy to assemble the different components of the air vent assembly.

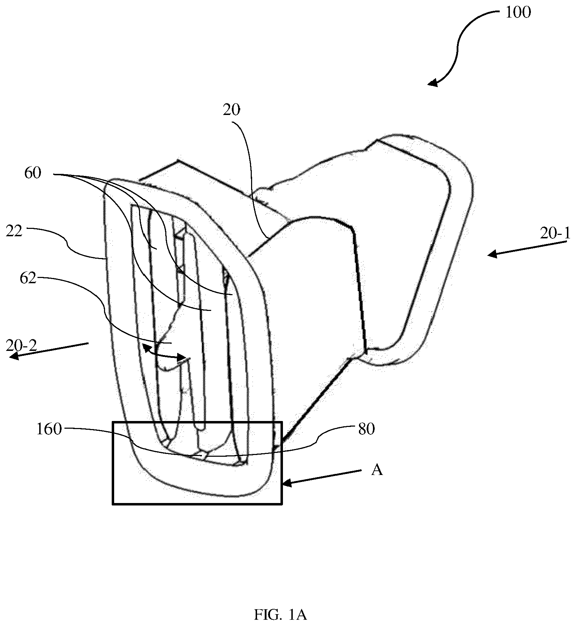

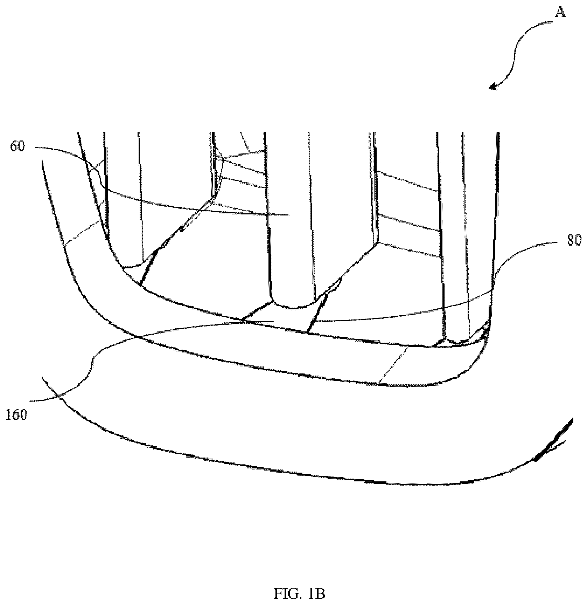

Referring now to FIGs. 1A and 1B, according to a present embodiment, an air vent assembly (100) for a vehicle is shown. The air vent assembly (100) has a housing (20) which defines an air duct with an air inlet (20-1) and an air outlet (20-2) arranged to guide and direct an air flow into the vehicle interior. In the present embodiment, the air vent assembly further includes one or more air directing member (60), specifically three air directing members i.e. a central and two side air directing members are shown extending in the longitudinal direction of the housing (20) for changing the directivity of an air flow or shutting off the air flow into the vehicle. In another embodiment (now shown), the one or more air directing member can be extended substantially perpendicular to a longitudinal direction of the housing (20). The air directing member (60) being mounted to be movable in rotation relative to the housing (20) in one or more groove (80), specifically three grooves (80) for three air directing members are provided in or on the housing (20) for changing the direction of the air flow or shutting off the air flow into the vehicle. A central air directing member (60) of the three air directing members includes a knob (62) to rotate the one or more air directivity member manually by a passenger as shown.

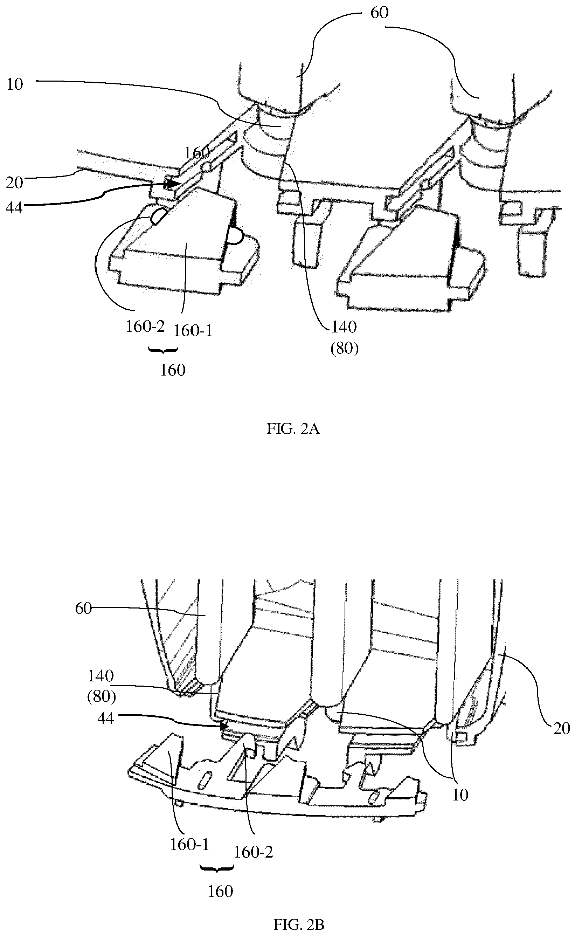

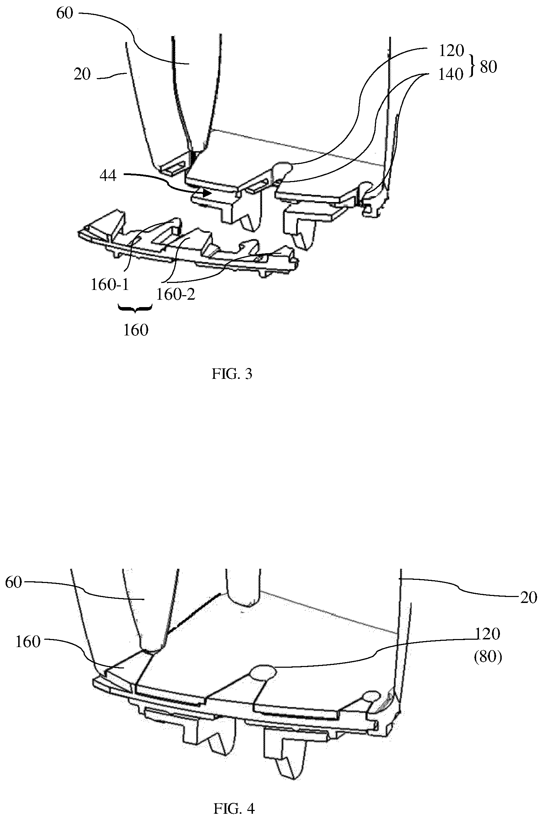

In the present embodiment as shown in FIGs. 2A / 2B and 3, the one or more groove (80) being open at one of its ends wherein a filling element (160) is adapted to fit into the one or more groove (80) for closing the one or more groove (80). More particular, the one or more groove (80) has a disc or circular-shaped close end portion (120) and a V-shaped or flared-shaped open end portion (140) (as shown in FIG. 3). The air directing member (60) has a pin (10) mountable in or on the one or more groove (80). Particularly, the pin (10) being rotatably disposed in or on the disc-shaped closed-end portion (120) of the one or more groove (80).

In a first embodiment of the present invention as shown in FIG. 2A, three numbers of air directing members (60) being mounted to be movable in rotation relative to the housing (20) in three numbers of grooves (80) are shown, and a plurality of filling element (160) (three numbers of filling element (160)) individually flush-fitted into each of the grooves (80) is shown, for blocking a translational movement of the plurality of air directing members (60) in the plurality of grooves (80) however allowing the rotational movement of the air directing member (60) in or on the one or more groove (80).

In a second embodiment of the present invention as shown in FIG. 2B, three numbers of air directing members (60), each air directing members (60) being mounted to be movable in rotation relative to the housing (20) in three numbers of grooves (80) is shown. Further, a single filling element (160) comprising three numbers of V-shaped or flared shaped slices (160-1) to be flush-fitted into the plurality of grooves (80) is shown, for blocking a translational movement of the plurality of air directing members (60) in the plurality of grooves (80) and however, allowing the rotational movement of the air directing member (60) in or on the one or more groove (80).

In an implementation, when there is less space at front of the assembly (100), the first embodiment of the present invention as shown in FIG. 2A can be used, where multiple filling elements (160) can be individually fitted into each of the grooves (80). In another implementation, when there is a sufficient space at front of the assembly (100), the second embodiment of the present invention as shown in FIG. 2A can be used, where a single filling element (160) comprising multiple V-shaped or flared shaped slices (160-1) extending from the body of the filling element (160) are fitted into the grooves (80) together.

Now referring the FIG.s 3 and 4 in detail in the present embodiment, a portion of the filling element (160) has a dimension substantially the same as of the V-shaped or flared shaped open end portion (140) such that it forms an air-tight connection when flush-fitted into the one or more groove (80) for blocking a translational movement of the air directing member (60) in or on the one or more groove (80) and allowing the rotational movement of the air directing member (60) in or on the one or more groove (80). Particularly, the V-shaped or flared shaped open end portion (140) of the groove (80) has a width greater than or equal to the width of the disc or circular shaped closed-end portion (120) of the groove (80) and increasing between the disc or circular shaped closed-end portion (120) and the V-shaped or flared shaped open end portion (140) of the one or more groove (80) thus a flush fit arrangement is achieved as shown in FIG. 4.

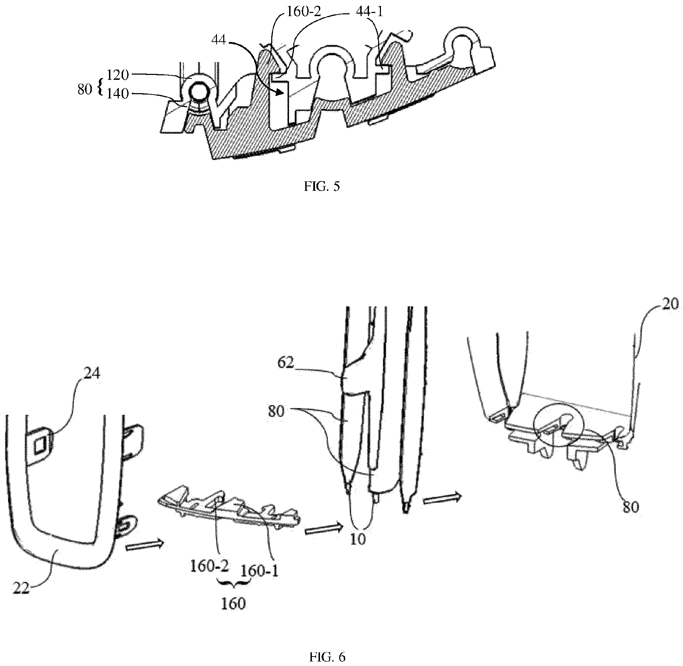

In the present embodiment, as shown in FIG. 5, the filling element (160) has one or more fixing portion (160-2) depending upon the dimension such as the length and size of the filling element, and a c-shaped slot (44) is arranged adjacent to the groove located in or on the housing. The c-shaped slot (44) has a protruded portion (44-1) to engage and lock the fixing portion (160-2) of the filling element (160) into the protruded portion (44-1) of the c-shaped slot (44) of the housing (20). Thus, the one or more fixing portion (160-2) is not visible when the filling element (160) is arranged or fixed into the groove (80).

In an implementation as shown in FIG. 7, the pin (10) of the air directing member (60) is mounted into the disc or circular-shaped closed-end portion (120) of the groove (80). Then, the filling element (160) is flush-fitted into the V-shaped or flared shaped open end portion (140) of the one or more groove (80) and further, a deco bezel (22) with a clipping member (24) being releasably clipped onto or within an engaging member (not shown) of the housing (20).

It is to be appreciated by a person skilled in the art that the filling element(s) of the present invention is flush-fitted into the one or more groove for blocking a translational movement of the air directing member in or on the one or more groove however allowing the rotational movement of the air directing member, and further creates an air-tight assembly to keep the inner side or internal components of the assembly unexposed to and protected from the external environment, dust particles, moisture, and other unwanted objects or organisms.

It would also be obvious for a person skilled in the art that while various embodiments and drawings of the present disclosure elaborates upon an air vent assembly comprising a given (three) number of air directing members, grooves, individual filling elements of FIG. 2A, and V-shaped or flared shaped slices of the single filling element of FIG. 2B, however, the present invention is not just limited to the disclosed number of above components, but can be of any number based on the requirement of user, and all such embodiments are also well within the scope of the present invention.

Moreover, in interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

The proposed invention provides an advantage of being cost-effective, easy to use, easy to assembly with satisfactory air-tight fitting and finishing and harmonious appearance of an air vent assembly of a vehicle is achieved. Further, the present invention provides another advantage of blocking a translational movement of air directing members in or on the grooves however allowing the rotational movement of the air directing member, to ensure smooth operation of the air vent assembly.

## Claims

1. An air vent assembly (100) for a vehicle, comprising:
a housing (20) defining an air duct with an air inlet (20-1) and an air outlet (20-2) arranged to guide and direct an air flow into the vehicle interior;
one or more air directing member (60), the air directing member (60) being mounted to be movable in rotation relative to the housing (20) in one or more groove (80) provided in or on the housing (20) for changing the direction of the air flow or shutting off the air flow into the vehicle interior, the one or more groove (80) being open at one of its ends; and
a filling element (160), **characterized in that** the filling element (160) is arranged into the one or more groove (80) for closing the one or more groove (80).

2. The air vent assembly (100) as claimed in claim 1, wherein the one or more groove (80) has a disc or circular shaped close end portion (120) and a V-shaped or flared shaped open end portion (140); wherein at least a portion of the filling element (160) has a dimension substantially same as of the V-shaped or flared shaped open end portion (140) such that it forms an air-tight connection when flush-fitted into the one or more groove (80) for blocking a translational movement of the air directing member (60) in or on the one or more groove (80) and allowing the rotational movement of the air directing member (60) in or on the one or more groove (80).

3. The air vent assembly (100) as claimed in claim 1, wherein each of the one or more air directing member (60) comprises a pin (10) mountable in or on the one or more groove (80), the pin (10) being rotatably disposed in or on the disc-shaped closed-end portion (120) of the one or more groove (80).

4. The air vent assembly (100) as claimed in claim 2, wherein the V-shaped or flared shaped open end portion (140) of the groove (80) has a width greater than or equal to the width of the disc or circular shaped closed-end portion (120) and increasing between the disc or circular shaped closed-end portion (120) and the V-shaped or flared shaped open end portion (140) of the one or more groove (80).

5. The air vent assembly (100) as claimed in claim 1, comprising a plurality of the air directing members (60), each of the air directing members (60) being mounted to be movable in rotation relative to the housing (20) in one of the grooves (80), and further comprising a plurality of the filling element (160) flush-fitted into one of the grooves (80) for blocking a translational movement of the plurality of the air directing members (60) in the corresponding grooves (80).

6. The air vent assembly (100) as claimed in claim 1, comprising a plurality of the air directing members (60), each of the air directing members (60) being mounted to be movable in rotation relative to the housing (20) in one of the grooves (80), and wherein the filling element (160) comprising a plurality of V-shaped or flared shaped slices (160-1) adapted to flush-fitted into the one of the grooves (80) for blocking a translational movement of the plurality of the air directing members (60) in the corresponding grooves (80).

7. The air vent assembly (100) as claimed in claim 1, wherein the filling element (160) further comprises one or more fixing portion (160-2) to engage and lock the filling element (160) into a c-shaped slot (44) of the housing (20).

8. The air vent assembly (100) as claimed in claim 7, wherein the fixing portion (160-2) is friction fitted or snap-fitted into the c-shaped slot (44).

9. The air vent assembly (100) as claimed in claim 7 or 8, wherein the c-shaped slot (44) comprises a protruded portion (44-1) arranged to engage and lock the fixing portion (160-2) when the filling element (160) closes the groove (80).

10. The air vent assembly (100) as claimed in claim 1, wherein a deco bezel (22) with a clipping member (24) being releasably clipped onto or within an engaging member arranged in or on the housing (20).
